# EUROPÄISCHE PATENTSCHRIFT

(11) **EP 3 401 571 B1**
(45) Veröffentlichungstag und Bekanntmachung des Hinweises auf die Patenterteilung: **07.07.2021**
(21) Anmeldenummer: 17170582.5
(22) Anmeldetag: 11.05.2017
(51) Int. Cl.: F16H 25/24, F16H 25/22, F16H 25/20, F16C 29/00, F16F 9/32

(54) **KUGELGEWINDETRIEB**
BALL SCREW
VIS D'ENTRAÎNEMENT À BILLE

(43) Veröffentlichungstag der Anmeldung: 14.11.2018
(73) Patentinhaber: SFS Intec Holding AG, 9435 Heerbrugg (CH)
(72) Erfinder: Kuster, Hanspeter, 9436 Balgach (CH); Leuenberger, Pascal, 9327 Tübach (CH); Sinz, Daniel, 6921 Kennelbach (AT)

(56) Entgegenhaltungen:
- JP-A- 2013 019 534
- US-A- 4 137 784
- US-A1- 2009 260 463

## Beschreibung

Die vorliegende Erfindung befasst sich mit einem Kugelgewindetrieb, dessen Gewindespindel an einem Ende eine geräuschhemmende Lagerung aufweist.

### TECHNISCHER HINTERGRUND

Als Kugelumlaufspindel oder auch Kugelgewindetrieb (KGT) wird üblicherweise ein Wälzschraubtrieb bezeichnet mit Kugeln als Wälzkörper. Technisch gesehen funktioniert ein KGT als Schraubgetriebe, dessen Unter- bzw. Übersetzung durch die Dimensionierung der Gewindespindel, genauer durch die Steigung des Gewindes bestimmt wird.

Kugelgewindetriebe werden in vielen technischen Anwendungen eingesetzt, vor allem im Maschinenbau und dort bevorzugt in Werkzeugmaschinen. Zunehmend kommen KGT aber auch als Längsantriebe in Bereichen zum Einsatz, wo bisher meist Hydrauliksysteme Verwendung fanden, z.B. in Pressen, Spritzgiessmaschinen und Servolenkungen.

KGT spielen auch eine zunehmende Rolle in elektromechanischen und elektrohydraulischen Bremssystemen. Mit diesen Systemen soll Bremsdruck aufgebaut werden unabhängig von oder unterstützend zu der Bremsbetätigung des Fahrers. Das Bremssignal des Fahrers oder eines Fahrzeugsicherungssystems (e.g. Kollisionswarnung, ABS Sensorik) wird hierbei elektronisch ausgewertet und als Systemantwort auf einen Elektromotor übertragen. Dessen Drehbewegung wirkt durch den KGT in eine translatorische Bewegung umgesetzt. Diese wiederum kann einen Bremskolben bewegen und dadurch, insbesondere hydraulisch, einen Bremsdruck in einem oder mehreren Bremskreisen aufzubauen oder direkt eine Bremswirkung ausüben (e.g. Anpressen eines Bremsbelags auf eine Bremsscheibe).

### STAND DER TECHNIK

Im Grundsatz besteht ein KGT aus einer Gewindespindel und einer sie umschliessenden Spindelmutter. Das Gewinde von Spindel und Spindelmutter ist als Laufrille für Kugeln ausgelegt. Die in den Gewindegängen zwischen Spindel und Mutter umlaufenden Kugeln berühren im Idealfall (d.h. spielfrei) beide Flanken des Gewindes an je einem Punkt (gotische Laufrille). Die Spindelmutter (seltener die Gewindespindel) ist ferner mit einer Kugelumlenkung ausgestattet, die an einem definierten Punkt die Kugeln aus der Laufrille abhebt und über einen Rückführkanal an einem anderen Punkt wieder in einen Gewindegang zurückführt, wodurch ein geschlossener Kugelumlauf erzielt wird. Durch die umlaufenden Kugeln wird die relative Beweglichkeit von Spindel und Mutter erzielt, gleichzeitig übertragen die Kugeln als Lager sämtliche Kräfte zwischen Spindel und Mutter. Der mechanische Wirkungsgrad erreicht durch die geringe Rollreibung beim Kugelgewindetrieb bis zu 95%.
Die translatorische Bewegung kann, je nachdem welche Komponente angetrieben und welche linear geführt wird, von der Spindel oder von der Mutter bewirkt werden.

Längere Spindeln neigen im Betrieb zu Vibrationen, vor allem, wenn hohe axiale Bewegungen der Spindelmutter erzielt werden sollen, was regelmässig hohe Dreh- bzw. Antriebsgeschwindigkeiten der Spindel erfordert. Diese Schwingungen können zu unerwünschter Geräuschbildung führen und zu erhöhtem Verschleiss. Dies trifft umso mehr zu, wenn, wie im vorliegenden Anwendungsfall, die Gewindespindel nur einseitig fest gelagert werden kann.

Die japanische Offenlegungsschrift JP 2013-19534 A beschreibt einen Linearantrieb mit einem Kugelgewindetrieb der oben beschriebenen Gattung. An einem Ende der in einer Hülse geführten Spindel ist ein Kunststoffelement als Lagerelement angebracht, welches die Ablenkung des Spindelelementes unterdrücken hilft. Dieses Kunststoffelement weist mehrere, am Aussenumfang angebrachte Rillen auf.

Ausgehend von diesem Stand der Technik besteht die Aufgabe darin, das Kunststoffelement so zu verbessern, dass eine geräuschhemmende Wirkung erzielt bzw. verbessert wird.

### BESCHREIBUNG DER ERFINDUNG

Die vorliegende Erfindung löst dieses Problem, indem ein im Lagerring integriertes Feder- bzw. Dämpfungselement vorgesehen wird, das als Kombination mindestens einer Einkerbung am Innenumfang des Lagerrings und einem Ringspalt ausgebildet ist..

Ein solcher Kugelgewindetrieb (10) umfasst eine Gewindespindel (12) mit einem ersten, freien Ende (16) und einem zweiten Ende (17), das mit einem Antrieb verbunden werden kann, und eine Spindelmutter (14), die die Gewindespindel (12) koaxial zumindest teilweise umschliesst, wobei einer Vielzahl von Kugeln (26) im Zwischenraum zwischen Gewindespindel (12) und Spindelmutter (14) umlaufen. Eine Verlängerungshülse (15) schliesst koaxial an die Spindelmutter (14) an und ist mit ihr fest verbunden. Folglich ist sie mit ihr relativ zur Gewindespindel (12) beweglich. Am ersten Ende (16) am Aussenumfang der Gewindespindel (12) ist ein im Wesentlichen kreisförmiger Lagerring (18, 30, 50, 70) angebracht, der als Wellenlager zwischen Gewindespindel (12) und der Verlängerungshülse (15) dient und der durch mindestens ein integriertes Feder-/Dämpfungselement eine geräuschhemmende Wirkung entfaltet. Der Lagerring ist hierbei am bzw. auf dem ersten Ende der Gewindespindel so gesichert, dass er sich mit Spiel bewegen kann, insbesondere rotieren, aber nicht von der Gewindespindel rutschen kann.

Das Feder-Dämpfungselement des Lagerrings (30, 50, 70) umfasst dabei eine Kombination von mindestens einer Einkerbung (32, 52, 72) am Innenumfang des Lagerrings (30, 50, 70) und einem Ringspalt (34, 54, 74). Das Feder-Dämpfungselement ist ein konstruktives Merkmal des Lagerrings bzw. eine Kombination aus technischen Einzelmerkmalen. Mit Einkerbung ist dabei eine Vertiefung, eine Tasche, ein Ausschnitt gemeint, der das Material des Lagerrings radial von innen nach aussen an einer Stelle schwächt, ohne den Lagerring vollständig zu unterbrechen. Die Einkerbung kann als gerader Schlitz oder v- bzw. u-förmige Vertiefung ausgeführt werden.

Der Ringspalt (34, 54, 74) dagegen stellt eine vollständige Unterbrechung des Lagerrings an einer Stelle dar. Bevorzugt wird der Ringspalt so ausgeführt, dass der Spalt an seiner engsten Stelle zwischen 0.1mm bis 0.8mm beträgt (im an der Spindel montierten Zustand). Der Ringspalt (34, 54, 74) muss hierbei nicht als geradliniger, radialer Schlitz ausgeführt werden, sondern kann kantengerundet oder keilförmig ausgeführt sein.

In einer weiter bevorzugten Ausführungsform kann der Kugelgewindetrieb (10) ein Feder-Dämpfungselement des Lagerrings (30, 50, 70) aufweisen, das zusätzlich mindestens einen Einschnitt (36, 56, 76) am Aussenumfang mitumfasst. Mit Einschnitt ist dabei eine Einkerbung, eine Vertiefung, eine Tasche gemeint, die das Material des Lagerrings radial von aussen nach innen an einer Stelle schwächt, ohne den Lagerring vollständig zu unterbrechen. Der Einschnitt kann als gerader Schlitz oder v- bzw. u-förmige Vertiefung ausgeführt werden.

In einer bevorzugten Ausführungsform wird der Einschnitt (36, 56, 76) am Aussenumfang als radial nach innen verlaufender Schlitz ausgeführt ist, dessen Tiefe, vom Aussenumfang gemessen, 30-60% der radialen, nominellen Ringbreite des Lagerrings (30, 50, 70) beträgt.

Besonders bevorzugt weist der Einschnitt bzw. Schlitz (36, 56, 76) über seine Länge eine im wesentliche gleiche Breite auf. Das entspricht der o.a. Ausführung als gerader, gleichmässiger, im wesentlichen radialer Schlitz.

In einer Weiterbildung der Erfindung schliesst an das radial innen liegende Ende des einen Einschnitts (56, 76) ein (weiteren) Schlitz (59, 79) an, der vom Mittelpunkt (60, 80) des Lagerrings (50, 70) aus betrachtet im Wesentlichen dem Verlauf eines Kreisbogens oder einer Kreissehne folgt und unter einem Winkel von 20° bis 60°, bevorzugt 40°-50° erscheint. Mit anderen Worten, der Lagerring weist einen in axialer Draufsicht im Wesentlichen L-förmigen Einschnitt auf, wobei die radiale Komponente durch die oben beschriebene Einkerbung am Aussenumfang gebildet wird, an die im angenähert rechten Winkel ein Einschnitt oder Einkerbung anschliesst, deren Verlauf als Kreisbogen oder Kreissehne beschrieben werden kann. Die Länge des weiteren Schlitzes lässt (59, 79) sich am besten als der Winkel beschreiben, unter dem, vom axialen Mittelpunkt des Lagerrings radial nach aussen betrachtet, dieser weitere Schlitz (59, 79) erscheint.

In einer weiter ausgeführten Darstellungsform der Erfindung kann der weitere Schlitz (59, 79) in seinem Verlauf eine nicht konstante Breite aufweisen und insbesondere an seinem vom Einschnitt (56, 76) abgewandten Ende einen im wesentlichen kreisförmigen Verlauf der Schlitzwand zeigt. Mit anderen Worten, der als Kreisbogen oder Kreissehne im Lagerring verlaufende Schlitz weist an seinem Ende eine tropfenförmige Aufweitung auf.

Durch den L-förmigen Einschnitt erhält das Feder-/Dämpfungselement die Form einer Zunge. Vom Einschnitt (56, 76), vom weiteren Schlitz (59, 79) und vom Aussenumfang des Lagerrings (50, 70) wird ein Materialstück definiert, welches ein Anpresselement (58, 78) bildet mit einer federnden Zunge (57, 77).

In einer weiter bevorzugten Ausbildungsform kann das Anpresselement (58, 78) einen vom nominellen Aussendurchmesser positiv abweichenden Radius aufweisen. Damit ist gemeint, dass der nominelle Durchmesser des Lagerrings im Bereich der federnden Zunge etwas grösser ausgebildet ist. Durch die Federwirkung der Zunge lässt sich diese Erhebung jedoch so radial nach innen drücken, dass, unter Spannung, der nominelle Aussendurchmesser des Lagerrings erreicht wird.

Bevorzugt kann der Lagerring (18, 30, 50, 70) einstückig aus einem thermoplastischen Kunststoff geformt werden.

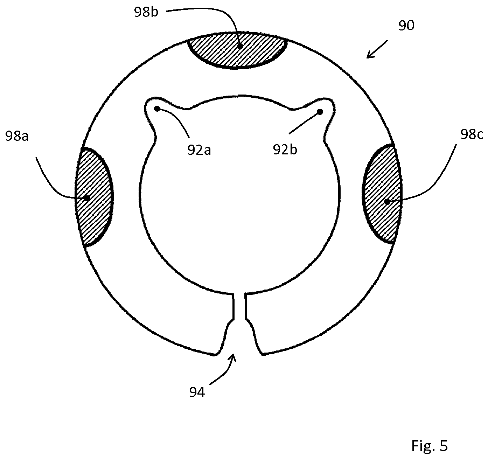

In einer weiter bevorzugten Ausführungsform kann der Kugelgewindetrieb 10 ein Feder-Dämpfungselement des Lagerrings (90) zusätzlich mindestens ein Andrückelement (98) am Aussenumfang mitumfassen. Diese Variante ist in Figur 5 gezeigt. Statt einer Aussparung 36 wird eine Region bzw. ein Volumen an Material am Aussenumfang vorgesehen, das als Andrückelement wirkt. Dazu kann das Andrückelement 98 des Lagerrings 90 aus einem Material hergestellt wird, das grössere Elastizität aufweist als das Material des restlichen Lagerrings 90, vereinfacht gesprochen aus einem weicheren Kunststoff. Wie auch in einer der Varianten oben beschrieben, kann das Anpresselement 98 vorteilhafterweise einen vom nominellen Aussendurchmesser positiv abweichenden Radius aufweisen.

Die Montage des Lagerrings erfolgt durch Aufschieben auf das erste, freie Ende (16) der Gewindespindel. Die Sicherung kann durch einen flachen, flanschartigen Abschluss der Gewindespindel gewährleistet werden. Die geräuschhemmende Wirkung des Lagerings wird unter anderem dadurch erzielt, dass durch das Feder-Dämpfungselement eine gefederte Stützwirkung zwischen der Verlängerungshülse (15) und der Gewindespindel (12) erzielt wird. Die Verlängerungshülse wie auch die Gewindespindel schwingen nicht mehr unabhängig, sondern sind durch den Lagerring gegeneinander abgestützt. Vibrationen der Gewindespindel bzw. der Verlängerungshülse werden durch das Feder-Dämpfungselement reduziert und nicht ohne weiteres auf das andere Bauteil übertragen.

### KURZBEZEICHNUNG DER FIGUREN

Figur 1 zeigt einen erfindungsgemässen Kugelgewindetrieb im Längsschnitt.
Figur 2 zeigt einen Lagerring 30 als Bestandteil des erfindungsgemässen Kugelgewindetriebs in einer ersten, einfachen Ausführung in axialer Draufsicht (links), im Querschnitt (Mltte) und in einer 3-D-Ansicht (rechts).
Figur 3 zeigt einen Lagerring 50 als Bestandteil des erfindungsgemässen Kugelgewindetriebs in einer zweiten, komplexeren Ausführung in axialer Draufsicht (links), im Querschnitt (Mitte) und in einer 3-D-Ansicht (rechts).
Figur 4 zeigt einen Lagerring 70 als Bestandteil des erfindungsgemässen Kugelgewindetriebs in einer dritten Ausführung in axialer Draufsicht (links), im Querschnitt (Mitte) und in einer 3-D-Ansicht (rechts).
Figur 5 zeigt einen Lagerring 90 in einer weiter entwickelten Ausführungsform in axialer Draufsicht

### BESCHREIBUNG DER FIGUREN

Die Erfindung wird nun mit Bezug auf die begleitenden Zeichnungen anhand Ausführungsformen beispielhaft erläutert.

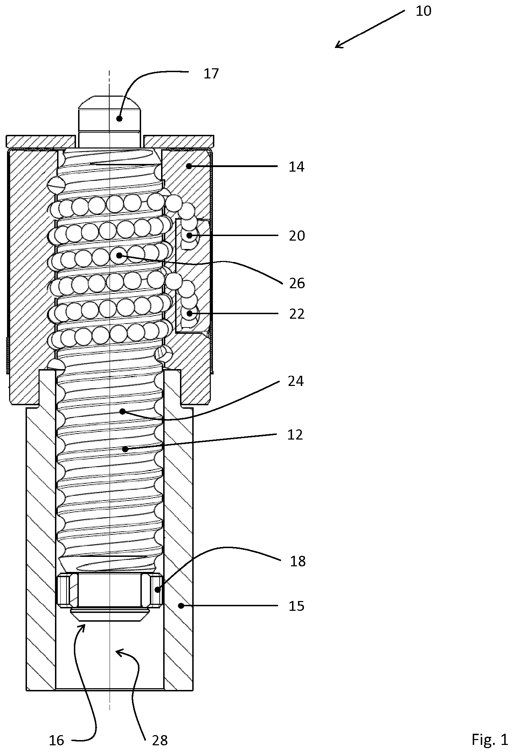

Figur 1 zeigt einen Kugelgewindetrieb 10 im axialen Längsschnitt. Die Grundbestandteile sind eine Gewindespindel 12 und eine Spindelmutter 14, die die Gewindespindel 12 koaxial zumindest teilweise umschliesst. Die zentrale Längsachse der Spindel 12 bildet gleichzeitig die Systemachse 28. Die Gewindespindel weist auf der Aussenseite eine helix-förmige, umlaufende Laufrille 24 auf, ähnlich dem Gewindegang einer Schraube. Die Spindelmutter 14 zeigt auf ihrer Innenseite ein zur Gewindespindel 12 komplementäres Innengewinde mit einer ebenfalls annähernd (im Querschnitt) halbschalenförmigen Laufrille. Der Zwischenraum zwischen Spindelmutter 14 und Gewindespindel 12 ist so bemessen, dass Kugeln 26 in den Laufrillen umlaufen können und so für die fast spielfreie relative Beweglichkeit von Spindel 12 und Spindelmutter 14 sorgen. Im Bild sind zwei Kugelumlenkungen 20, 22 gezeigt, die dafür verantwortlich sind, dass die Kugeln einen endlosen Umlauf besitzen. Dazu werden sie an einer definierten Stelle durch eine (hier nicht gezeigte) Aushebevorrichtung aus der Laufrille abgehoben und um einige Gewindegänge versetzt wieder in den Zwischenraum zwischen Spindel 12 und Spindelmutter 14 eingesetzt. Die hier gezeigte, zweifach vorhandene, äussere Kugelumlenkung kann prinzipiell auch durch eine innere Kugelumlenkung ersetzt werden, ohne den erfinderischen Gedanken zu tangieren.
Die Gewindespindel 12 besitzt ein erstes Ende 16, das in Figur 1 als freies Ende gezeichnet ist und ein zweites Ende 17, das ausgelegt ist, um mit einem Antrieb verbunden zu werden. Wenn die Motorseite als ruhendes Bezugssystem gewählt wird, bedeutet dies, dass bei sich drehender Spindel 12 die Spindelmutter axial verschoben wird. In der vorliegenden Ausführungsform kann die translatorische Bewegung durch eine Verlängerungshülse 15, die die Gewindespindel koaxial umhüllt und mit der Spindelmutter 12 fest verbunden ist, auf weitere Stell- bzw. Messglieder übertragen werden. In einer technisch äquivalenten Ausführung könnte natürlich die Verlängerungshülse 15 und die Spindelmutter 14 aus einem Stück gefertigt werden. Die Unterscheidung macht funktionell den Sinn, dass die Spindelmutter die Kugelgewindefunktion leistet, während die Verlängerungshülse 15 kein Innengewinde aufweist und damit auch keine Kugeln aufnehmen kann. Die Stützung und Führung, die die Kugeln im Zwischenraum zwischen Spindelmutter 14 und Gewindespindel 12 leisten, fällt damit für den Bereich der Verlängerungshülse 15 aus. Aus statischen wie auch dynamischen Gründen macht es aber Sinn, die relative Lage dieser beiden Bauteile präzise zu definieren. Überraschenderweise hat sich dabei gezeigt, dass ein einfacher Lagerring am ersten Ende 16 der Spindel 12 nicht ausreicht, im Gegenteil, er kann beim Betrieb entstehende Schwingungen von einem Bauteil zum anderen übertragen. Deswegen wurde der Lagerring dahingehend modifiziert, dass der als Wellenlager zwischen Gewindespindel 12 und der Verlängerungshülse 15 dienende Lagerring 18 mindestens ein integriertes Feder-/Dämpfungselement erhält, dass eine geräuschhemmende Wirkung entfaltet.

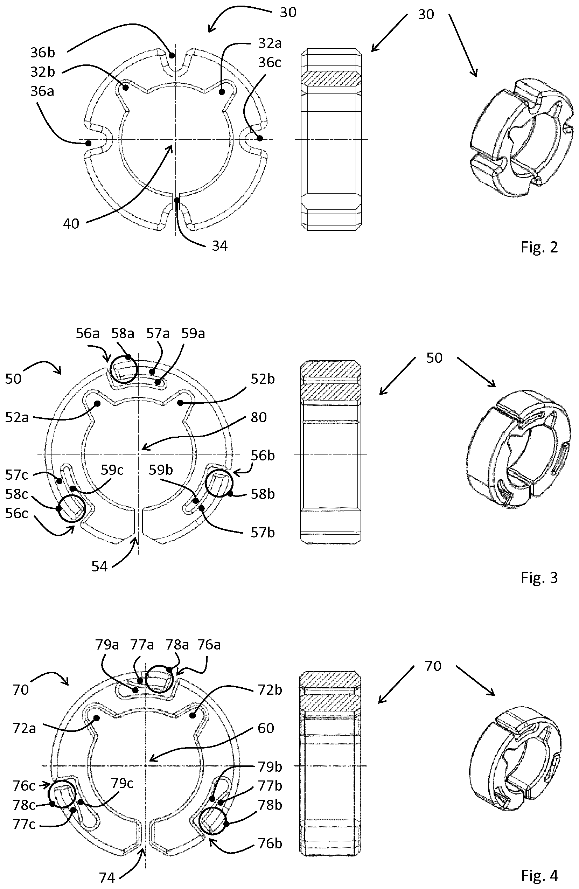

Figur 2 zeigt daher eine erste, einfache Ausführungsform gemäss der vorliegenden Erfindung. Das Feder-Dämpfungselement des Lagerrings 30 umfasst eine Kombination von mindestens einer Einkerbung 32 am Innenumfang des Lagerrings 30 und einem Ringspalt 34. Für die Figuren 2-4 gilt, dass Bezugszeichen die mit zusätzlichen Buchstaben bezeichnet sind mehrfach vorhanden sind bzw. sein können. So weist Figur 1 zwei Einkerbungen 32a und 32b auf. Die Figuren und die Anzahl der gezeigten Merkmale sollen hierbei nur erläuternd, aber nicht limitierend verstanden werden. In einer weiteren Ausführungsform kann das Feder-Dämpfungselement 30 zusätzlich mindestens einen oder mehrere Einschnitte 36 a, b, c am Aussenumfang mitumfassen. Diese unterstützen das Feder- bzw. Dämpfungsverhalten zusätzlich.

Die Einschnitte 36, 56, 76 können unterschiedlich ausgebildet sein. Figur 2 zeigt kerbförmige Einschnitte 36 mit einem u oder v-Profil. Die Tiefe, vom Aussenumfang radial in Richtung Mittelpunkt 40 gemessen, kann bevorzugt 30-60% der radialen, nominellen Ringbreite des Lagerrings (30, 50, 70) betragen. Diese Angaben gelten für alle Darstellungen gemäss Figur 2, 3 und 4. Figur 3 und 4 zeigen eine Ausführung der Einschnitte als am Aussenumfang radial nach innen verlaufender Schlitz. Diese Ausführung könnte auch in der Konfiguration nach Figur 2 Anwendung finden. Als Schlitz würde insbesondere ein Einschnitt gelten, der über seine Länge eine im wesentliche gleiche Breite aufweist.

Eine weitere Variante des Feder-Dämpfungselementes führt das Design mit dem am Aussenumfang radial nach innen verlaufender Schlitz 56, 76 fort. An dessen radial innenliegendem Ende setzt demnach ein weiterer Schlitz 59, 79 an, der um einen Winkel von ca. 90° versetzt, im Wesentlichen parallel zum Aussenumfang verläuft. Er kann gebogen sein, im Sinne von streng parallel zum Aussenumfang verlaufend (Kreisbogen) oder gerade (Kreissehne) oder zwischen diesen beiden Extremen. Die Länge dieses Zusatzes, des weiteren Schlitzes, beträgt zwischen 20° und 60°, bevorzugt 40°-50° im Bogenmass beschrieben.

Der weitere Schlitz 59, 79 kann wie in Figur 3 gezeigt mit gleichmässiger Breite ausgeführt werden. Das ist jedoch nicht zwingend. Der Breitenverlauf kann sich im Verlauf weiten oder verengen, insbesondere kann das Ende dieses weiteren Schlitzes 59, 79 als halbrund oder in Tropfenform ausgeführt sein, ähnlich Fig. 4. Diese im wesentliche kreisförmige Wand hat Vorteile bei der Herstellung wie auch in der Funktion als Federelement.

Durch die resultierende im wesentliche L-förmige Ausgestaltung der beiden Schlitze 56,59 bzw. 76, 79 entsteht eine Art Zunge 57, 77, die federn kann. Somit kann sie auch als Anpresselement 58, 78 radial nach aussen wirken. Diese Wirkung kann dadurch verstärkt werden, wenn die Materialstärke der Zunge 57, 77 radial nach aussen betrachtet minimal grösser ausgeführt wird, sprich, wenn der Aussendurchmesser des Lagerrings 50, 70 an dieser Stelle geringfügig grösser ist als nominal.

Der beschriebene Lagerring lässt sich bevorzugt mittels Spritzgiessen einstückig aus einem thermoplastischen Kunststoff herstellen.

In einer bevorzugten Ausführungsform beträgt der Aussendurchmesser des Lagerrings 12.4mm, die Ringbreite ca. 2.6mm und die Tiefe ca. 4mm. Die Dimensionen lassen sich jedoch ohne erfinderisches Zutun in weitem Masse durch Auf- bzw. Herunterskalieren anpassen, ohne dass die erfinderischen Merkmale verloren gehen. Die in den Figuren 3 und 3 gezeigten Ausführungsformen speziell des Feder/Dämpfungselementes (56, 57, 58, 59, 76, 77, 78, 79) können auch mehrfach am Umfang vorgesehen werden, je nach Dimensionierung des Lagerrings.

In Figur 5 ist eine weitere bevorzugte Ausführungsform eines Lagerrings 90 gezeigt. Einschnitte 36 am Aussenumfang wie in Figur 2 gezeigt oder analog geformte Aussparungen am Aussenumfang eines Lagerrings 90 werden hierbei mit einem Werkstoff gefüllt, der elastischer ist als das Material des eigentlichen Lagerrings. Dadurch wird gegenüber der Ausführung von Figur 2 vermieden, dass der Ring an den Stellen durch die Materialweglassung geschwächt wird. Gleichzeitig erfüllt das elastische Material eine federnde Wirkung und fungiert so als Dämpfungselement. In einer bevorzugten Variante kann das Material in den Regionen 98 radial nach aussen über den vom eigentlichen Lagerring 90 markierten Aussenumfang herausragen, was, analog zu der Variante von Figur 4, den Dämpfungseffekt stärken hilft. Die Herstellung so einer Variante gelingt beispielsweise durch ein Montagespritzgiessverfahren oder ein Mehrstufenspritzgiessverfahren.

Die in der vorstehenden Beschreibung, in den Zeichnungen sowie in den Ansprüchen offenbarten Merkmale der Erfindung können sowohl einzeln als auch in beliebiger, jedoch technisch sinnvoller bzw. vorteilhafter Kombination für die Verwirklichung der Erfindung wesentlich sein. Eine nicht-explizite Darstellung einer Kombination von Merkmalen bedeutet nicht, dass eine solche Kombination nicht sinnvoll oder nicht möglich ist. Umgekehrt bedeutet eine gemeinsame Darstellung von Merkmalen nicht, dass zwischen den Merkmalen in jedem Fall ein struktureller und/oder funktioneller Zusammenhang besteht.

### BEZUGSZEICHENLISTE

- 10: Kugelgewindetrieb
- 12: Gewindespindel
- 14: Spindelmutter
- 15: Verlängerungshülse
- 16: erstes, freies Ende der Gewindespindel
- 17: zweites Ende der Gewindespindel
- 18: Lagerring (kreisförmig)
- 26: Kugeln
- 28: Systemachse

- 30, 50, 70, 90: kreisförmiger Lagerring
- 32, 52, 72, 92: Einkerbung am Innenumfang des Lagerrings
- 34, 54, 74, 94: Ringspalt
- 36, 56, 76: Einschnitt am Aussenumfang
- 57, 77: federnde Zunge
- 58, 78: Anpresselement
- 59, 79: weiterer (anschliessender) Schlitz
- 98: Andrückelement

- 40, 60, 80: Mittelpunkt des Lagerrings

- a, b, c: bezeichnen jeweils das gleiche Element bzw. Merkmal, wenn es in einer Ausführungsform mehrfach vorhanden ist.

## Patentansprüche

1. Kugelgewindetrieb (10), umfassend
• eine Gewindespindel (12) mit einem ersten, freien Ende (16) und einem zweiten Ende (17), das mit einem Antrieb verbindbar ist, und
• eine Spindelmutter (14), die die Gewindespindel (12) koaxial zumindest teilweise umschliesst und
• eine Vielzahl von Kugeln (26), die im Zwischenraum zwischen Gewindespindel (12) und Spindelmutter (14) umlaufen; und
• einer Verlängerungshülse (15), die koaxial an die Spindelmutter (14) anschliesst, mit ihr fest verbunden ist und mit ihr relativ zur Gewindespindel (12) beweglich ist, und
• einen im Wesentlichen kreisförmigen, am ersten Ende (16) am Aussenumfang der Gewindespindel (12) angebrachten Lagerring (18, 30, 50, 70, 90), der als Wellenlager zwischen Gewindespindel (12) und der Verlängerungshülse (15) dient
**dadurch gekennzeichnet, dass** der Lagerring (18, 30, 50, 70, 90) ein integriertes Feder-/Dämpfungselement aufweist, das als Kombination von mindestens einer Einkerbung (32, 52, 72, 92) am Innenumfang des Lagerrings (30, 50, 70, 90) und einem Ringspalt (34, 54, 74, 94) ausgebildet ist und eine geräuschhemmende Wirkung entfaltet.

2. Kugelgewindetrieb (10) nach Anspruch 1, **dadurch gekennzeichnet, dass** das Feder-Dämpfungselement des Lagerrings (30, 50, 70) zusätzlich mindestens einen Einschnitt (36, 56, 76) am Aussenumfang mitumfasst.

3. Kugelgewindetrieb (10) nach Anspruch 2, **dadurch gekennzeichnet, dass** der Einschnitt (36, 56, 76) am Aussenumfang als radial nach innen verlaufender Schlitz ausgeführt ist, dessen Tiefe, vom Aussenumfang gemessen, 30-60% der radialen, nominellen Ringbreite des Lagerrings (30, 50, 70) beträgt.

4. Kugelgewindetrieb (10) nach Anspruch 2-3, **dadurch gekennzeichnet, dass** der Einschnitt bzw. Schlitz (36, 56, 76) über seine Länge eine im wesentliche gleiche Breite aufweist.

5. Kugelgewindetrieb (10) nach Anspruch 2-4, **dadurch gekennzeichnet, dass** der mindestens eine Einschnitt (56, 76) an seinem radial innen liegenden Ende an einen (weiteren) Schlitz (59, 79) anschliesst, der vom Mittelpunkt (60, 80) des Lagerrings (50, 70) aus betrachtet im Wesentlichen dem Verlauf eines Kreisbogens oder einer Kreissehne folgt und unter einem Winkel von 20° bis 60°, bevorzugt 40°-50° erscheint.

6. Kugelgewindetrieb (10) nach Anspruch 5, **dadurch gekennzeichnet, dass** der weitere Schlitz (59, 79) in seinem Verlauf eine nicht konstante Breite aufweist und insbesondere an seinem vom Einschnitt (56, 76) abgewandten Ende einen im wesentlichen kreisförmigen Verlauf der Schlitzwand zeigt.

7. Kugelgewindetrieb (10) nach Anspruch 5-6, **dadurch gekennzeichnet, dass** das vom Einschnitt (56, 76), vom weiteren Schlitz (59, 79) und vom Aussenumfang des Lagerrings (50, 70) definierte Materialstück ein Anpresselement (58, 78) bildet mit einer federnden Zunge (57, 77).

8. Kugelgewindetrieb (10) nach Anspruch 5-7, **dadurch gekennzeichnet, dass** das Anpresselement (58, 78) einen vom nominellen Aussendurchmesser positiv abweichenden Radius aufweist.

9. Kugelgewindetrieb (10) nach Anspruch 1-8, **dadurch gekennzeichnet, dass** der Lagerring (18, 30, 50, 70) einstückig aus einem thermoplastischen Kunststoff geformt ist.

10. Kugelgewindetrieb (10) nach Anspruch 1, **dadurch gekennzeichnet, dass** das Feder-Dämpfungselement des Lagerrings (90) zusätzlich mindestens ein Andrückelement (98) am Aussenumfang mitumfasst.

11. Kugelgewindetrieb (10) nach Anspruch 10, **dadurch gekennzeichnet, dass** das mindestens eine Andrückelement (98) des Lagerrings (90) aus einem Material hergestellt wird, das grössere Elastizität aufweist als das Material des restlichen Lagerrings (90).

12. Kugelgewindetrieb (10) nach Anspruch 10-11, **dadurch gekennzeichnet, dass** das Anpresselement (98) einen vom nominellen Aussendurchmesser positiv abweichenden Radius aufweist.

## Claims

1. A ball screw drive (10), comprising:
• a threaded spindle (12) having a first, free end (16) and a second end (17) which is connectable to a drive, and
• a spindle nut (14) that at least partially surrounds the threaded spindle (12) coaxially, and
• a plurality of balls (26) recirculating in a space between the threaded spindle (12) and the spindle nut (14); and
• an extension sleeve (15) that coaxially connects to the spindle nut (14), is fixedly connected thereto and is movable together therewith relative to the threaded spindle (12), and
• a substantially circular bearing ring (18, 30, 50, 70, 90) attached at the first end (16) on the outer circumference of the threaded spindle (12), which bearing ring serves as a shaft bearing between the threaded spindle (12) and the extension sleeve (15),
**characterized in that** the bearing ring (18, 30, 50, 70, 90) has an integrated spring/damping element which is formed by a combination of at least one notch (32, 52, 72, 92) on the inner circumference of the bearing ring (30, 50, 70, 90) and a gap (34, 54, 74, 94) and which provides a sound-dampening effect.

2. The ball screw drive (10) according to claim 1, **characterized in that** the spring/damping element of the bearing ring (30, 50, 70) additionally comprises at least one indentation (36, 56, 76) on the outer circumference.

3. The ball screw drive (10) according to claim 2, **characterized in that** the indentation (36, 56, 76) on the outer circumference is formed as a radially inwardly extending slot, the depth of which, measured from the outer circumference, is 30-60% of the radial nominal ring width of the bearing ring (30, 50, 70).

4. The ball screw drive (10) according to claims 2-3, **characterized in that** the indentation or slot (36, 56, 76) has a width that is substantially constant over its length.

5. The ball screw drive (10) according to claims 2-4, **characterized in that** the at least one indentation (56, 76) connects at its radially inner end to a further slot (59, 79) which, as viewed from the center (60, 80) of the bearing ring (50, 70), substantially follows the course of a circular arc or a chord and appears at an angle of 20° to 60°, preferably 40°-50°.

6. The ball screw drive (10) according to claim 5, **characterized in that** the further slot (59, 79) in its course has a non-constant width and, in particular, shows a substantially circular course of the slot wall at its end facing away from the indentation (56, 76).

7. The ball screw drive (10) according to claims 5-6, **characterized in that** the piece of material defined by the indentation (56, 76), the further slot (59, 79) and the outer circumference of the bearing ring (50, 70) forms a pressing element (58, 78) with a resilient tongue (57, 77).

8. The ball screw drive (10) according to claims 5-7, **characterized in that** the pressing element (58, 78) has a radius deviating positively from the nominal outer diameter.

9. The ball screw drive (10) according to claims 1-8, **characterized in that** the bearing ring (18, 30, 50, 70) is formed in one piece from a thermoplastic material.

10. The ball screw drive (10) according to claim 1, **characterized in that** the spring/damping element of the bearing ring (90) additionally comprises at least one pressing element (98) on the outer circumference.

11. The ball screw drive (10) according to claim 10, **characterized in that** the at least one pressing element (98) of the bearing ring (90) is made of a material having greater elasticity than the material of the remaining bearing ring (90).

12. The ball screw drive (10) according to claims 10-11, **characterized in that** the pressing element (98) has a radius deviating positively from the nominal outer diameter.

## Revendications

1. Vis d'entraînement à billes (10), comprenant
• une broche filetée (12) avec une première extrémité (16) libre et une deuxième extrémité (17), qui peut être reliée à un système d'entraînement, et
• un écrou de broche (14), qui entoure coaxialement au moins en partie la broche filetée (12), et
• une pluralité de billes (26), qui circulent dans l'espace intermédiaire entre la broche filetée (12) et l'écrou de broche (14) ; et
• un manchon de prolongement (15), qui se raccorde coaxialement à l'écrou de broche (14), est relié fixement à celui-ci et est mobile avec celui-ci par rapport à la broche filetée (12), et
• une bague de support (18, 30, 50, 70, 90) pour l'essentiel circulaire, montée sur la première extrémité (16) sur la périphérie extérieure de la broche filetée (12), qui sert de support d'arbre entre la broche filetée (12) et le manchon de prolongement (15),
**caractérisée en ce que** la bague de support (18, 30, 50, 70, 90) comporte un élément d'amortissement faisant ressort intégré, qui est constitué en tant que combinaison d'au moins une encoche (32, 52, 72, 92) à la périphérie intérieure de la bague de support (30, 50, 70, 90) et un interstice annulaire (34, 54, 74, 94) et développe un effet amortissant les bruits.

2. Vis d'entraînement à billes (10) selon la revendication 1, **caractérisée en ce que** tout l'élément d'amortissement faisant ressort de la bague de support (30, 50, 70) englobe en plus au moins une entaille (36, 56, 76) sur la périphérie extérieure.

3. Vis d'entraînement à billes (10) selon la revendication 2, **caractérisée en ce que** l'entaille (36, 56, 76) est exécutée sur la périphérie extérieure sous la forme d'une fente se profilant radialement vers l'intérieur, dont la profondeur, mesurée depuis la périphérie extérieure, comporte 30-60 % de la largeur annulaire radiale, nominale de la bague de support (30, 50, 70).

4. Vis d'entraînement à billes (10) selon la revendication 2-3, **caractérisée en ce que** l'entaille ou fente (36, 56, 76) comporte sur sa longueur une largeur, pour l'essentiel, identique.

5. Vis d'entraînement à billes (10), selon la revendication 2-4, **caractérisée en ce qu'**au moins une entaille (56, 76) se raccorde à son extrémité située radialement à l'intérieur à une (autre) fente (59, 79), qui suit, observée depuis le point central (60, 80) de la bague de support (50, 70), pour l'essentiel le profil d'un arc de cercle ou d'une corde de cercle et apparaît sous un angle de 20° à 60°, de préférence 40-50°.

6. Vis d'entraînement à billes (10), selon la revendication 5, **caractérisé en ce que** l'autre fente (59, 79) comporte dans son profil, une largeur non constante et présente, en particulier, à son extrémité opposée à l'entaille (56, 76) un profil pour l'essentiel circulaire de la paroi de fente.

7. Vis d'entraînement à billes (10), selon la revendication 5-6, **caractérisée en ce que** la pièce de matériau définie par l'entaille (56, 76), par l'autre fente (59, 79) et par la périphérie extérieure de la bague de support (50, 70) forme un élément de compression (58, 78) avec une languette (57, 77) faisant ressort.

8. Vis d'entraînement à billes (10), selon la revendication 5-7, **caractérisée en ce que** l'élément de compression (58, 78) comporte un rayon s'écartant positivement du diamètre extérieur nominal.

9. Vis d'entraînement à billes (10), selon la revendication 1-8, **caractérisée en ce que** la bague de support (18, 30, 50, 70) est formée en une seule pièce dans une matière thermoplastique.

10. Vis d'entraînement à billes (10), selon la revendication 1, **caractérisée en ce que** l'élément d'amortissement faisant ressort de la bague de support (90) englobe en plus au moins un élément de compression (98) sur la périphérie extérieure.

11. Vis d'entraînement à billes (10), selon la revendication 10, **caractérisée en ce qu'**au moins un élément de pression (98) de la bague de support (90) est fabriqué dans un matériau qui comporte une élasticité plus grande que le matériau de la bague de support (90) restante.

12. Vis d'entraînement à billes (10), selon la revendication 10-11, **caractérisée en ce que** l'élément de compression (98) comporte un rayon s'écartant positivement du diamètre extérieur nominal.
